# EUROPÄISCHE PATENTSCHRIFT

(11) **EP 0 880 447 B1**
(45) Veröffentlichungstag und Bekanntmachung des Hinweises auf die Patenterteilung: **03.08.2005**
(21) Anmeldenummer: 97951930.3
(22) Anmeldetag: 20.11.1997
(51) Int. Cl.: B60T 8/32

(54) **VERFAHREN ZUM BETREIBEN EINER BLOCKIERGESCHÜTZTEN KRAFTFAHRZEUGBREMSANLAGE**
METHOD FOR OPERATING AN ANTI-LOCK BRAKE INSTALLATION OF A MOTOR VEHICLE
PROCEDE PERMETTANT DE FAIRE FONCTIONNER UNE INSTALLATION DE FREINAGE A ANTIBLOCAGE DE VEHICULE A MOTEUR

(30) Priorität: 23.11.1996 DE 19648596
(43) Veröffentlichungstag der Anmeldung: 02.12.1998
(73) Patentinhaber: Continental Teves AG & Co. oHG, 60488 Frankfurt (DE)
(72) Erfinder: GRÄBER, Johannes, D-32429 Minden (DE)
(86) Internationale Anmeldenummer: PCT/EP1997/006496
(87) Internationale Veröffentlichungsnummer: WO 1998/023473

(56) Entgegenhaltungen:
- WO-A-96/02409
- DE-A- 4 427 247
- DE-A- 4 439 904
- DE-A- 19 503 622
- DE-C- 4 329 140

## Beschreibung

Die Erfindung betrifft ein Verfahren zum Betreiben einer blockiergeschützten Kraftfahrzeugbremsanlage, die einen unabhängig vom Fahrerwillen betätigbaren pneumatischen Bremskraftverstärker sowie einen dem Bremskraftverstärker nachgeschalteten Hauptbremszylinder aufweist, der mit einem eine Rückforderpumpe aufweisenden Hydroaggregat zusammenwirkt, das eine mittels eines Trennventils absperrbare erste Leitung sowie eine mittels eines Schaltventils absperrbare zweite Leitung aufweist, wobei die erste Leitung eine Verbindung zwischen dem Hauptbremszylinder und den einzelnen Fahrzeugrädern zugeordneten Radbremsen und die zweite Leitung eine Verbindung zwischen dem Hauptbremszylinder und der Saugseite der Rückförderpumpe ermöglicht, bei welchem Verfahren beim Erkennen der Notwendigkeit einer Fahrerunterstützung der pneumatische Bremskraftverstärker angesteuert wird und das Trennventil in seine Schließstellung und das Schaltventil in seine Offenstellung gleichzeitig mit der Ansteuerung der Rückförderpumpe zeitversetzt umgeschaltet werden.

Ein derartiges Verfahren ist aus der DE 44 27 247 A1 bekannt. Das Besondere an dem vorbekannten Verfahren besteht darin, daß bei einer sehr schnellen Betätigung des Bremspedals, die von einer elektronischen Steuereinheit als Fahrerwunsch dahingehend interpretiert wird, daß eine Vollbremsung erfolgen soll, (sog. Bremsassistent-Funktion), eine Aussteuerung des Bremskraftverstärkers bis an seinen Aussteuerpunkt erfolgt, bei der gleichzeitig die Rückförderpumpe eingeschaltet wird und das Trennventil sowie das Schaltventil so geschaltet werden, daß der Hauptbremszylinder von den Bremsen abgekoppelt wird und nunmehr als Ladedruckquelle - "Vorladepumpe" - für die Rückförderpumpe arbeitet, die die Bremsdruckquelle für die Radbremsen bildet.

Bei dem vorbekannten Verfahren ist jedoch die erhebliche Belastung der Rückförderpumpe insbesondere in der Anfangsphase des Druckaufbaus als besonders nachteilig anzusehen.

Aus der DE 44 27 247 A1 eine Bremsdruck-Steuerungseinrichtung bekannt, mittels der bei einem Erkennen der Notwendigkeit einer Fahrerunterstützung ein pneumatischer Bremskraftverstärker angesteuert wird, wobei zeitversetzt ein Trennventil des Bremssystems in seine Schließestellung und ein Schaltventil in seine Offenstellung umgeschaltet werden.

In der DE 43 29 140 C1 ist ferner eine Bremsdruck-Steuerungseinrichtung beschrieben, mittels der bei einem Erkennen der Notwendigkeit einer Fahrerunterstützung ein pneumatischer Bremskraftverstärker angesteuert wird, wobei eine Rückförderpumpe des Bremskraftverstärker angesteuert wird und Ventile geschaltet werden.

Es ist die Aufgabe der vorliegenden Erfindung, ein Verfahren zum Betreiben einer blockiergeschützten Kraftfahrzeugbremsanlage der eingangs genannten Art vorzuschlagen, das bei der Realisierung der "Bremsassistenten-Funktion" in der Anfangsphase des Bremsdruckaufbaus eine Entlastung der hydraulischen Druckquelle ermöglicht.

Diese Aufgabe wird erfindungsgemäß dadurch gelöst, daß eine Ermittlung des im Hauptbremszylinder eingesteuerten Druckgradienten (dp/dt) durchgeführt wird, wobei die Ansteuerung der Rückförderpumpe und das Umschalten des Trenn- sowie des Schaltventils dann erfolgen, wenn der Druckgradient einen Schwellenwert unterschritten hat und noch nicht alle Fahrzeugräder an der Kraftschlußgrenze liegen bzw. keine Blockierschutzregelung stattfindet.

Das erfindungsgemäße Verfahrens sieht demnach vor, daß eine Auswertung des im Hauptbremszylinder eingesteuerten Druckgradienten durchgeführt wird, wobei die Rückförderpumpe angesteuert wird, wenn der Druckgradient einen Schwellenwert unterschritten hat und noch nicht alle Fahrzeugräder an der Kraftschlußgrenze liegen.

Dabei ist es besonders vorteilhaft, wenn die Ansteuerung der Rückförderpumpe bzw. das Umschalten des Trenn- sowie des Schaltventils vor dem Erreichen des durch die Ansteuerung des Bremskraftverstärkers erreichbaren maximalen Druckwertes erfolgt.

Die Erfindung wird im nachfolgenden Text an einem Ausführungsbeispiel im Zusammenhang mit einer beiliegenden Zeichnung näher erläutert. In der Zeichnung zeigt:
- Fig. 1: eine Ausführung einer blockiergeschützten Kraftfahrzeugbremsanlage, mit der das erfindungsgemäße Verfahren realisiert werden kann, und
- Fig. 2b: eine Darstellung der Funktion der Kraftfahrzeugbremsanlage nach Fig. 1 bei der Durchführung des Verfahrens in einem Diagramm

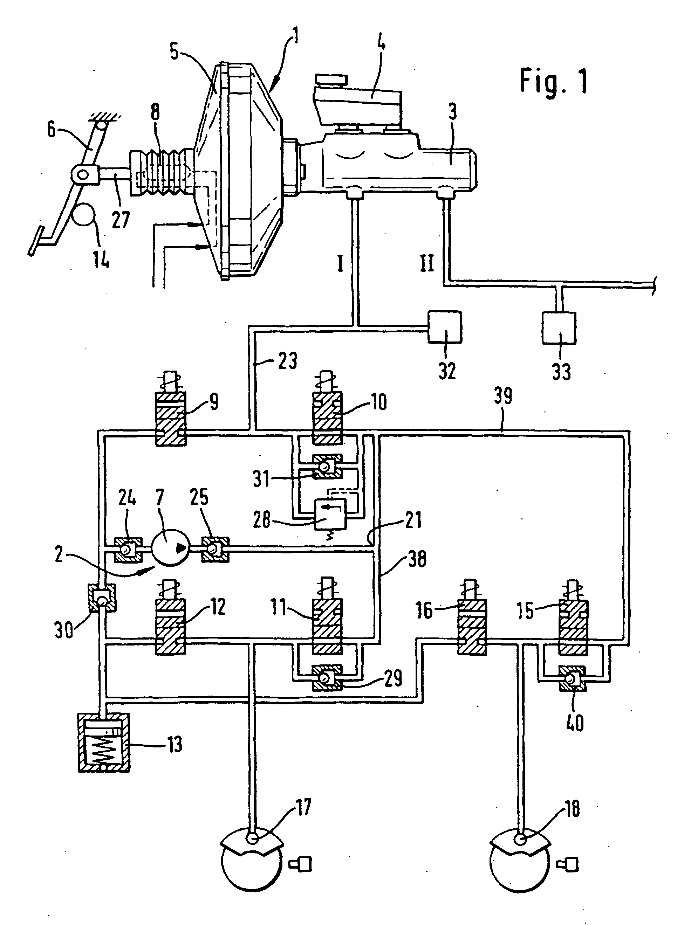

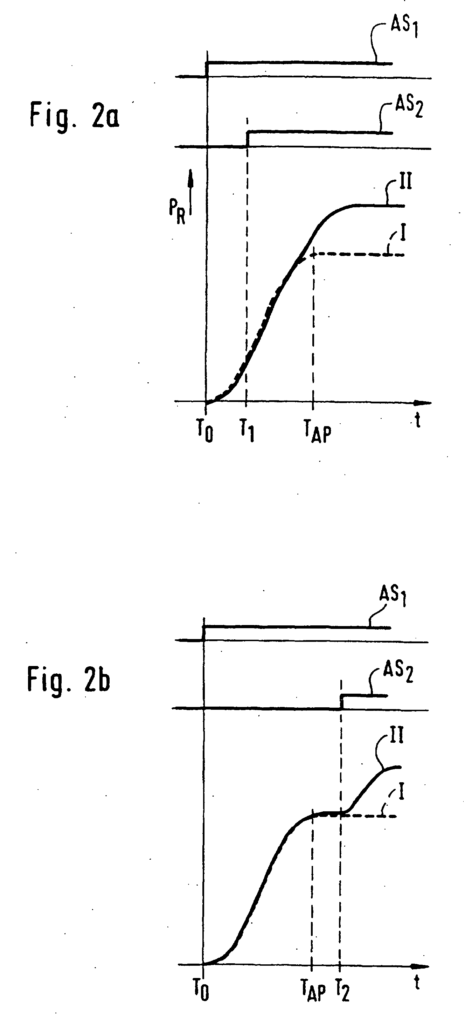

Zur Erleichterung des Verständnisses der Erfindung ist ferner in einer Fig. 2a nach dem Stand der Technik die Ventilbetätigung und der Verlauf des hydraulischen Drucks in der Kraftfahrzeugbremsanlage nach Fig. 1 gegen die Zeit dargestellt.

Die in der Zeichnung dargestellte erfindungsgemäße Bremsanlage zur Durchführung des erfindungsgemäßen Verfahrens weist zwei Bremskreise I und II auf, deren Aufbau völlig identisch ist, so daß die folgende Beschreibung eines Bremskreises ebenso auf den anderen zutrifft. Die gezeigte Bremsanlage besteht im wesentlichen aus zwei voneinander unabhängig betätigbaren Bremsdruckgebern 1,2, an die über nicht näher bezeichnete hydraulische Leitungen Radbremszylinder 17,18 anschließbar sind, sowie einem nicht gezeigten elektronischen Regler mit zugehöriger Sensorik. Die Zuordnung der Radbremszylinder 17,18 der einzelnen Bremskreise I, II ist derart getroffen, daß der erste Radbremszylinder 17 entweder einem Rad einer Fahrzeugachse und der andere Radbremszylinder 18 dem diagonal gegenüberliegenden Rad der anderen Fahrzeugachse zugeordnet ist
(diagonale Aufteilung der Bremskreise) oder aber beide Radbremszylinder 17 und 18 derselben Fahrzeugachse zugeordnet sind (Schwarzweiß-Aufteilung der Bremskreise).

Der vom Fahrer des Kraftfahrzeuges mittels eines Bremspedals 6 betätigbare, erste Druckgeber 1 besteht aus einem beispielsweise pneumatischen Bremskraftverstärker 5, dem ein Hauptbremszylinder, vorzugsweise ein Tandemhauptzylinder 3 nachgeschaltet ist, dessen nicht gezeigte Druckräume mit einem Druckmittelvorratsbehälter 4 verbindbar sind. An das Bremspedal 6 ist eine Betätigungsstange 27 angekoppelt, die eine Betätigung eines lediglich schematisch angedeuteten Steuerventils 8 ermöglicht, das den Aufbau eines pneumatischen Differenzdruckes im Gehäuse des Unterdruckbremskraftverstärkers 5 steuert. Ein nicht dargestellter, durch Steuersignale des elektronischen Reglers ansteuerbarer Elektromagnet ermöglicht dabei eine Fremdbetätigung des Steuerventils 8 unabhängig von einer am Bremspedal 6 eingeleiteten Betätigungskraft. Die für die Einleitung einer Fremdbetätigung insbesondere bei Panikbremsungen erforderliche Sensierung der Bremspedalbetätigungsgeschwindigkeit erfolgt vorzugsweise mittels eines nicht dargestellten Wegsensors, der Bewegungen der ebenfalls nicht gezeigten beweglichen Wand des Bremskraftverstärkers erfaßt.

Ein mit dem Bremspedal 6. in Wirkverbindung stehender Bremslichtschalter 14 ermöglicht die Erkennung einer Ansteuerung des Bremskraftverstärkers 5 durch den Fahrer oder durch eine Fremdbetätigung. Bei einer Fremdbetätigung des Bremskraftverstärkers 5 wird das Bremspedal 6 mitgeführt und so der Bremslichtschalter 14 umgesteuert. Eine durch den Fahrer eingeleitete Betätigung des Bremskraftverstärkers 5 kann durch den Einsatz eines nicht gezeigten Löseschalters erkannt werden.

Der zweite Druckgeber 2 ist durch ein Motor-Pumpen-Aggregat gebildet, das aus einer durch einen nicht gezeigten Elektromotor angetriebenen hydraulischen Rückförderpumpe 7 besteht, deren Saugseite über ein erstes Rückschlagventil 24 sowie ein elektromagnetisch betätigbares Schaltventil 9 an den ersten Druckraum des Hauptbremszylinders 3 angeschlossen ist. Von der Druckseite der Rückförderpumpe 7 strömt das Druckmittel über ein zweites Rückschlagventil 25 und eine nicht gezeigte Dämpfungskammer zu einem hydraulischen Knotenpunkt 21. An diesen angeschlossen ist sowohl ein zum ersten Radbremszylinder 17 führender Leitungsabschnitt 38 als auch ein zum zweiten Radbremszylinder 18 führenden Leitungsabschnitt 39. Eine hydraulische Leitung 23 verbindet die Druckseite der Rückförderpumpe 7 mit dem Tandemhauptzylinder 3. Außerdem ist zwischen dem Knotenpunkt 21 und dem Hauptbremszylinder 3 ein vorzugsweise elektromagnetisch betätigbares Trennventil 10 geschaltet, dem sowohl ein drittes Rückschlagventil 31 als auch ein Druckbegrenzungsventil 28 parallelgeschaltet ist. Zur Modulation des im ersten Radbremszylinder 17 eingesteuerten Drucks dienen eine Parallelschaltung eines Einlaß- (11) mit einem vierten Rückschlagventil 29 sowie ein Auslaßventil 12, wobei die erwähnte Parallelschaltung im Leitungsabschnitt 38 eingefügt ist und das Auslaßventil 12 zum Zwecke eines Radbremsdruckabbaus eine Verbindung zwischen dem ersten Radbremszylinder 17 und einem Niederdruckspeicher 13 ermöglicht, der über ein fünftes Rückschlagventil 30 mit der Saugseite der Rückförderpumpe 7 verbunden ist.

Um in dem zum betrachteten Bremskreis gehörenden zweiten Radbremszylinder 18 analog zum bereits betrachteten Radbremszylinder 17 den darin eingesteuerten hydraulischen Druck regulieren zu können, sind eine zweite Parallelschaltung eines zweiten Einlaß- (15) mit einem sechsten Rückschlagventil 40 sowie ein zweites Auslaßventil 16 vorgesehen, wobei die erwähnte Parallelschaltung im Leitungsabschnitt 39 eingefügt ist und das Auslaßventil 16 zum Zwecke eines Radbremsdruckabbaus eine Verbindung zwischen dem zweiten Radbremszylinder 18 und dem Niederdruckspeicher 13 herstellt.

Um schließlich vom Fahrer im Tandemhauptbremszylinder 3 eingeleitete Druckänderungen zu erkennen sind in beiden Bremskreisen I, II Mittel zur Erfassung der Hauptbremszylinderdrücke vorgesehen, die vorzugsweise durch an den ersten und den zweiten Bremskreis I,II angeschlossene Drucksensoren 32, 33 gebildet sind.

Bei einer Normalbremsung kann in den Radbremszylindern 17,18 sowohl ein Druckauf- als auch ein Druckabbau durch entsprechende Betätigung des ersten Bremsdruckgebers 1 über das offene Trennventil 10 sowie die offenen Einlaßventile 11,15 erfolgen.

Bei einer ABS-Regelbremsung, bei der beispielsweise das der Radbremse 17 zugeordnete Rad zu blockieren droht, wird die Rückförderpumpe 7 gestartet. Sowohl das Schalt-(9) als auch das Trennventil 10 bleiben unbetätigt. Die Druckmodulation erfolgt durch entsprechendes Schalten des Ein- (11) und des Auslaßventils 12, wobei das in den Niederdruckspeicher 13 abgelassene Druckmittel mit der Rückförderpumpe 7 auf das Hauptbremszylinder-Druckniveau zurückgefördert wird.

Wird, z.B. im Zeitpunkt T₀, (Fig. 2a,b), eine Notwendigkeit der Fahrerunterstützung beim Bremsvorgang bzw. einer vom Fahrerwillen unabhängigen Ansteuerung des Bremskraftverstärkers 5 erkannt, beispielsweise wenn die Geschwindigkeit, mit der das Bremspedal 6 vom Fahrer betätigt wird, einen vorgegebenen Schwellenwert überschreitet, so erzeugt der vorhin erwähnte elektronische Regler ein Ansteuersignal AS₁ für den das Steuerventil 8 betätigenden Elektromagneten, so daß die belüftbare Arbeitskammer des Bremskraftverstärkers 5 dem vollen Atmosphärendruck ausgesetzt wird und der erste Druckgeber 1 einen hydraulischen Druck liefert. Der beschriebene Druckaufbauvorgang ist in Fig. 2a,b durch die gestrichelte Kurve I dargestellt, wobei der Bremskraftverstärker 5 im Zeitpunkt T_{AP} seinen Aussteuerpunkt theoretisch erreichen würde.

Im Zeitpunkt T₁, der innerhalb des Zeitintervalls T₀ - T_{AP} liegt und durch den elektronischen Regler z. B. auf 200 ms festgelegt ist, erzeugt dieser Ansteuersignale AS₂, die ein Einschalten der Rückförderpumpe 7 sowie ein Umschalten des Trennventils 10 sowie des Schaltventils 9 bewirken. Dabei wird das Trennventil 10 geschlossen und das Schaltventil 9 geöffnet. Dadurch wird der erste Bremsdruckgeber 1 von den Radbremsen 17, 18 getrennt und der vorhin erwähnte Druckaufbauvorgang von der Rückförderpumpe 7 übernommen, die im Vergleich mit dem Bremskraftverstärker 5 einen höheren Druck liefert. Der Verlauf des im System herrschenden Gesamtdruckes wird durch die Kurve II dargestellt. Durch die beschriebene Art der Ansteuerung der erwähnten Elemente wird erreicht, daß in der Anfangsphase des Druckaufbaus auf der Saugseite der Rückförderpumpe 7 kein Vordruck wirkt und die Hydraulik geschont wird.

Bei dem in Fig. 2b diagrammatisch dargestellten Druckaufbau erfolgt eine Zuschaltung des zweiten Druckgebers 2 bzw. der Rückförderpumpe 7 nur bei wirklichem Bedarf, d.h., wenn nach dem Erreichen des Aussteuerpunktes T_{AP} des Bremskraftvertärkers 5 noch nicht alle Räder des Fahrzeuges an der Kraftschlußgrenze liegen und der zeitliche Gradient des im Hauptbremszylinder 3 eingesteuerten Druckes dp/dt einen vorher festgelegten Schwellenwert unterschritten hat. Die Ermittlung des Druckgradienten erfolgt durch Auswertung des Ausgangs-signals des an den Hauptbremszylinder 3 angeschlossenen Drucksensors 32 bzw. 33.

### Bezugszeichenliste

- 1: Bremsdruckgeber
- 2: Bremsdruckgeber
- 3: Hauptbremszylinder
- 4: Druckmittelvorratsbehälter
- 5: Bremskraftverstärker
- 6: Bremspedal
- 7: Rückförderumpe
- 8: Steuerventil
- 9: Schaltventil
- 10: Trennventil
- 11: Einlaßventil
- 12: Auslaßventil
- 13: Niederdruckspeicher
- 14: Bremslichtschalter
- 15: Einlaßventil
- 16: Auslaßventil
- 17: Radbremszylinder
- 18: Radbremszylinder
- 19: Absperrventil
- 20 21: Knotenpunkt
- 22 23: Leitung
- 24: Rückschlagventil
- 25: Rückschlagventil
- 26 27: Betätigungsstange
- 28: Druckbegrenzungsventil
- 29: Rückschlagventil
- 30: Rückschlagventil
- 31: Rückschlagventil
- 32: Drucksensor
- 33: Drucksensor
- 34: Drucksensor
- 35 36 37 38: Leitungsabschnitt
- 39: Leitungsabschnitt
- 40: Rückschlagventil

## Patentansprüche

1. Verfahren zum Betreiben einer blockiergeschützten Kraftfahrzeugbremsanlage, die einen unabhängig vom Fahrerwillen betätigbaren pneumatischen Bremskraftverstärker sowie einen dem Bremskraftverstärker nachgeschalteten Hauptbremszylinder aufweist, der mit einem eine Rückförderpumpe aufweisenden Hydroaggregat zusammenwirkt, das eine mittels eines Trennventils absperrbare erste Leitung sowie eine mittels eines Schaltventils absperrbare zweite Leitung aufweist, wobei die erste Leitung eine Verbindung zwischen dem Hauptbremszylinder und den einzelnen Fahrzeugrädern zugeordneten Radbremsen und die zweite Leitung eine Verbindung zwischen dem Hauptbremszylinder und der Saugseite der Rückförderpumpe ermöglicht,
bei welchem Verfahren beim Erkennen der Notwendigkeit einer Fahrerunterstützung der pneumatische Bremskraftverstärker (5) angesteuert wird und das Trennventil (10) in seine Schließstellung und das Schaltventil (9) in seine Offenstellung gleichzeitig mit der Ansteuerung der Rückförderpumpe (7) zeitversetzt umgeschaltet werden,
**dadurch gekennzeichnet, daß** eine Ermittlung des im Hauptbremszylinder (3) eingesteuerten Druckgradienten (dp/dt) durchgeführt wird, wobei die Ansteuerung der Rückförderpumpe (7) und das Umschalten des Trenn- (10) sowie des Schaltventils (9) dann erfolgen, wenn der Druckgradient einen Schwellenwert unterschritten hat und noch nicht alle Fahrzeugräder an der Kraftschlußgrenze liegen bzw. keine Blockierschutzregelung stattfindet.

2. Verfahren nach Anspruch 1,
**dadurch gekennzeichnet, daß** die Ansteuerung der Rückförderpumpe (7) und das Umschalten des Trenn- (10) sowie des Schaltventils (9) vor dem Erreichen des durch die Ansteuerung des Bremskraftverstärkers (5) erreichbaren maximalen Druckwertes erfolgt.

3. Verfahren nach Anspruch 1 oder 2,
**dadurch gekennzeichnet, daß** die Ermittlung des Druckgradienten (dp/dt) durch Auswertung von Ausgangssignalen eines an den Hauptbremszylinder (3) angeschlossenen Drucksensors (32 bzw. 33) erfolgt.

## Claims

1. Method of operating an anti-lock motor vehicle brake system which includes a pneumatic brake booster that is actuatable irrespective of the driver's wish and a master brake cylinder connected downstream of the brake booster and cooperating with a hydraulic assembly that includes a return pump, the hydraulic assembly having a first line closable by means of a separating valve and a second line closable by means of a switch valve, with the first line allowing a connection between the master brake cylinder and the wheel brakes associated with individual vehicle wheels and the second line allowing a connection between the master brake cylinder and the suction side of the return pump, in which method, when the necessity of assisting the driver is detected, the pneumatic brake booster (5) is actuated and the separating valve (10) is switched over into its closed position and the switch valve (9) is switched over into its open position in a deferred way, simultaneously with the actuation of the return pump (7),
**characterized in that** the gradient of pressure (dp/dt) introduced into the master brake cylinder (3) is determined, with the actuation of the return pump (7) and the switch-over of the separating valve (10) and the switch valve (9) taking place when the pressure gradient has fallen below a threshold value and not yet all of the vehicle wheels are near the adhesion limit or anti-lock control is not executed, respectively.

2. Method as claimed in claim 1,
**characterized in that** the actuation of the return pump (7) and the switch-over of the separating valve (10) and the switch valve (9) takes place before the maximum pressure value has been reached that is attainable by the actuation of the brake booster (5).

3. Method as claimed in claim 1 or 2,
**characterized in that** the pressure gradient (dp/dt) is determined by the evaluation of output signals of a pressure sensor (32 or 33, respectively) connected to the master brake cylinder (3).

## Revendications

1. Procédé pour faire fonctionner un système de freinage de véhicule automobile protégé contre le blocage, qui comporte un servofrein pneumatique pouvant être actionné indépendamment de la volonté du conducteur, ainsi qu'un cylindre de frein principal monté en aval du servofrein et qui coopère avec un groupe hydraulique comportant une pompe de refoulement ainsi qu'une première conduite pouvant être fermée au moyen d'une soupape de séparation et une deuxième conduite pouvant être fermée au moyen d'une soupape de commutation, la première conduite permettant une liaison entre le cylindre de frein principal et les freins des roues associés aux différentes roues du véhicule, et la deuxième conduite permettant une liaison entre le cylindre de frein principal et le côté aspiration de la pompe de refoulement, dans ce procédé, le servofrein pneumatique (5) étant commandé lorsqu'est reconnue la nécessité d'assister le conducteur, et la soupape de séparation (10) étant commutée, décalée dans le temps dans sa position de fermeture et la soupape de commutation (9) étant commutée dans sa position d'ouverture en même temps qu'est commandée la pompe de refoulement (7), **caractérisé en ce qu'**il est procédé à une détermination du gradient de pression (dp/dt) introduit dans le cylindre de frein principal (3), la commande de la pompe de refoulement (7) et la commutation de la soupape de séparation (10) ainsi que de la soupape de commutation (9) s'effectuant lorsque le gradient de pression a sous-dépassé une valeur de seuil et toutes les roues du véhicule ne se situent pas encore à la limite d'adhérence, ou aucune régulation de protection contre le blocage n'a lieu.

2. Procédé selon la revendication 1, **caractérisé en ce que** la commande de la pompe de refoulement (7) et la commutation de la soupape de séparation (10) ainsi que de la soupape de commutation (9) s'effectuent avant que ne soit atteinte la valeur de la pression maximale qui peut être atteinte par la commande du servofrein (5).

3. Procédé selon la revendication 1 ou 2, **caractérisé en ce que** la détermination du gradient de pression (dp/dt) s'effectue par exploitation de signaux de sortie d'un capteur de pression (32) ou (33) raccordé au cylindre de frein principal (3).
